# EUROPEAN PATENT SPECIFICATION

(11) **EP 4 442 519 B1**
(45) Date of publication and mention of the grant of the patent: **02.12.2026**
(21) Application number: 23166824.5
(22) Date of filing: 05.04.2023
(51) Int. Cl.: B60S 1/56, B60S 1/34, B60S 1/04

(54) **VEHICLE ROOF MODULE FOR A SENSOR**
FAHRZEUGDACHMODUL FÜR EINEN SENSOR
MODULE DE TOIT DE VÉHICULE POUR UN CAPTEUR

(43) Date of publication of application: 09.10.2024
(73) Proprietor: Inalfa Roof Systems Group B.V., 5807 GW Oostrum (NL)
(72) Inventor: Lu, Minjie, Shanghai (CN); Albers, Thomas Anton Martijnszoon, 5804 XJ Venray (NL)
(74) Representative: De Vries & Metman

(56) References cited:
- WO-A1-2021/121791
- DE-A1- 102021 206 715
- FR-A1- 2 888 189
- FR-A1- 3 127 458
- US-A1- 2020 355 808
- US-A1- 2021 116 269

## Description

The invention relates to a vehicle roof module for a sensor such as a LiDAR sensor or other light sensitive sensor. In particular, the invention relates to a cleaning assembly for a screen of a housing enclosing such a sensor.

### BACKGROUND

In support of driving assistance for vehicles and for the further aim of autonomous driving of vehicles, sensors for image recognition, for example of road and traffic signs, are being mounted on such vehicles. Thereto, the sensor may be placed within a sensor housing on top of the roof of a vehicle to provide a wide field of view. The sensor housing will have a front screen or visor to provide a light sensitive sensor, such as a LiDAR sensor, with an unobstructed field of view. As with any other vehicle screen or visor, such as head lights or front wind shield, dirt and dust may accumulate over time on the screen. In order to ensure proper operation and maintain a clear field of view, the screen or visor may need to be cleaned over time. Though wipers may be applied with such screens, a problem therewith is that these could interfere with the field of view of the sensor.

### SUMMARY OF INVENTION

It is an object of the invention to alleviate the above-mentioned disadvantage. When not used to wipe the visor of the sensor housing, the wiper is preferably in a position that allows for a clear field of view of the sensor. In addition, the wiper is preferably in a position that does not extend beyond the sensor housing. As this may either result in wind noise, in the wiper accumulating dirt and dust, and/or leaves the wiper being prone to fracture or tampering. In particular, the wiper blade or lip of the wiper blade may be prone to wear and tear. Accordingly, it is preferred to shield the wiper when not in use in order to prolong the lifetime and preserve proper functioning of the wiper.
According to the state of the art as defined by document WO2021/121791A1 there is provided a vehicle roof module in accordance with the preamble of the main claim.

As the material of the blade of the wiper, such as e.g. rubber, will be tensioned against the visor, moving the wiper to a resting or parking position is preferably done over a smooth surface, such that the wiper blade lip is prevented from grating or scraping against over an edge of the visor or over a transition of material between visor and sensor housing.

Accordingly, the inventors have a found it advantageously to have the surface of the visor to extend beyond the functional surface required for the field of view of the sensor i.e. sensor visibility. This to provide an extended parking surface for a wiper assembly. Taking advantage of this surface requires a kinematic assembly that parks the wiper assembly in that parking portion of the visor.

The invention is characterized as set forth in the characterizing part of the main claim.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawing, wherein:
FIG. 1 illustrates a perspective view of a vehicle roof with an example of a vehicle roof module in accordance with the invention;
FIG. 2 illustrates the vehicle roof module of Fig. 1 in more detail;
FIG. 3 illustrates in cross-section vehicle roof module of Fig. 1;
FIG. 4 is an exploded view of the roof module of Fig. 1;
FIG. 5 illustrates in cross-section an alternative example of a vehicle roof module in accordance with the invention;
FIGS. 6A-D illustrates an example of locator pin curve in accordance with the invention;
FIGS. 7A-E illustrate another example of locator pin curve in accordance with the invention; and
FIGS. 8A-G illustrates yet another example of locator pin curve in accordance with the invention.

### DETAILED DESCRIPTION

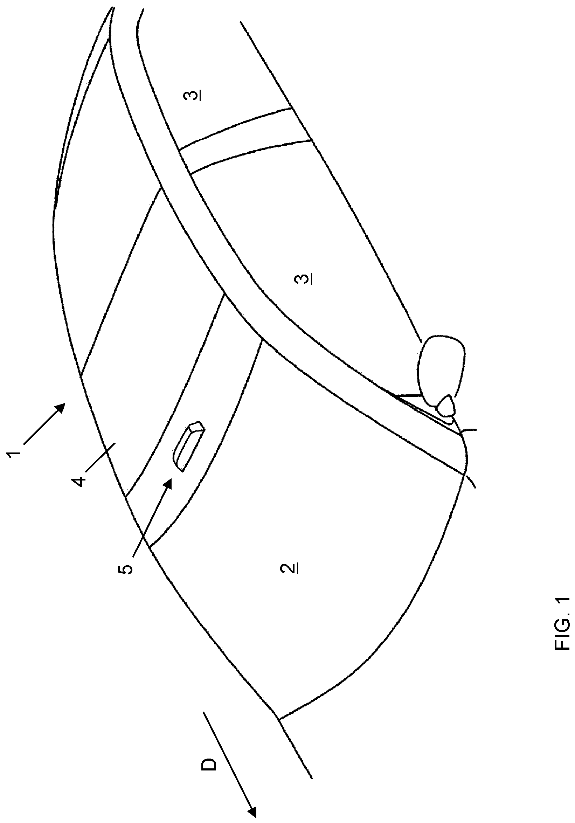

Referring to Fig. 1, a perspective view of an example of a vehicle roof 1 is schematically illustrated. Further shown are vehicle front window 2, side windows 3 and an optional roof window 4. On top of the vehicle roof 1a, a vehicle roof module 5 is shown, also referred to as an external sensor module, in this example the module 5 encloses a LiDAR sensor.

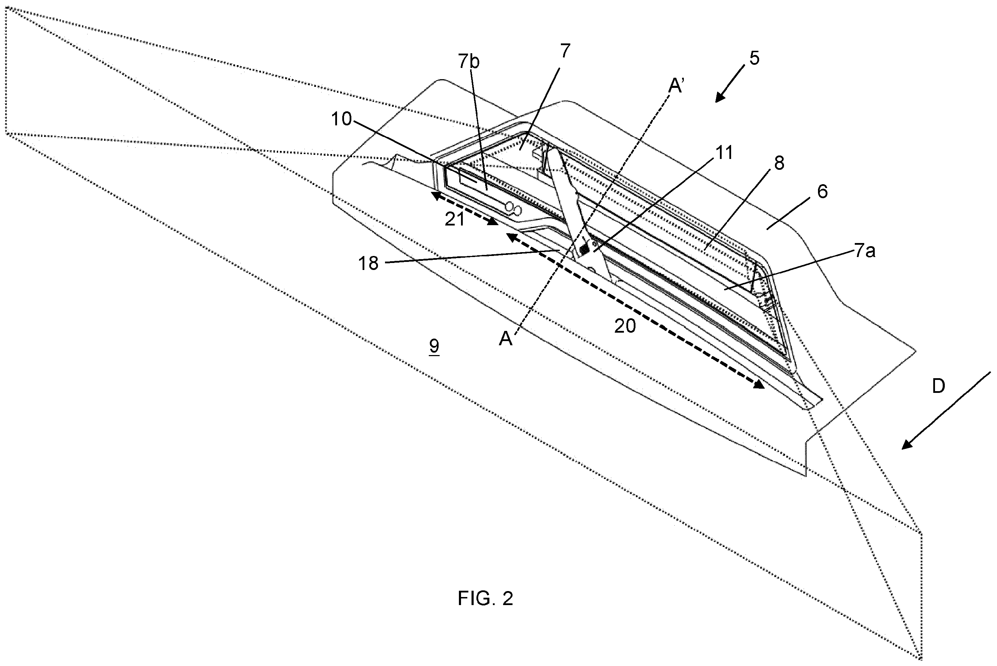

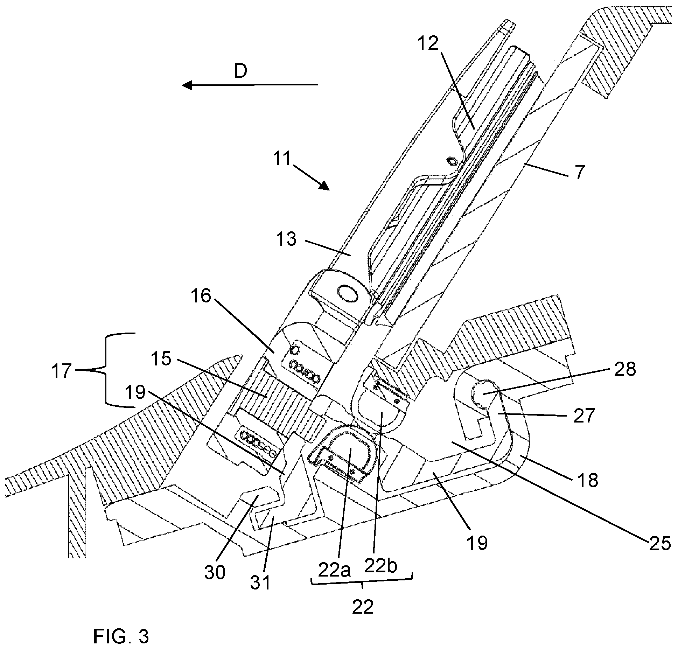

Referring to Fig. 2, the vehicle roof module 5 of Fig. 1 is shown in more detail. The module 5 includes a sensor housing 6 having a visor or screen 7 provided at a front side of the housing with reference to a forward driving movement of a vehicle, indicated by arow D. The visor 7 has a view portion 7a and a park portion 7b. The sensor housing 6 encloses a sensor 8 which has a field of view 9 that is aligned with the view portion 7a of the visor 7, which alignment ensures that objects within the field of view 9 may be detected by the sensor 8. The park portion of the visor 7 provides a resting position 10 for a wiper assembly 11, an example of which is shown in more detail in Fig. 3. The wiper assembly may include a wiper blade and a wiper arm. In order to prevent the wiper blade from freezing due to frost, the park portion and/or resting position may be provided with heating circuitry or heat conductor.

The roof module 5 further includes a guide 18, in this embodiment running in front of the housing 6 adjacent to the visor 7. The guide 18 defines a wiping path 20 and a parking path 21. The roof module further includes a sliding mechanism 17, such as seen in detail in Fig. 2, is configured for sliding the wiper assembly 11 over the guide 18 along the wiping path 20 and the parking path 21. When sliding the wiper assembly 11 over the wiping path 20 the wiper arm 13 slides along the sensor housing 6 such that the wiper blade 12 wipes at least the view portion of the visor 7. When sliding the wiper assembly 11 over the parking path 21 the wiper arm 13 slides along the sensor housing 6 such that the wiper blade 12 is moved over the park portion of the visor 7. Seen from the front, the park portion 7b of the visor will preferably be below the view portion 7a of the visor, such that when the wiper assembly 11 is parked there it will be hidden within the roof module and alleviate aerodynamic interference. Thereto, the guide 18 of the roof module may be recessed relative to the roof 1. Instead, or in addition, a wind deflector may be placed in front of the sensor housing 6. The wind deflector may be part of the roof module or be an integrated part of the guide 18. In each of the proposed embodiments, the wind deflector will be positioned such that the sensor 8 is provided with a clear field of view 9.

Furthermore, sliding along the parking path 21 slides the wiper assembly 11 between a parking position in the parking path 21 and an operational position in the wiping path 20. In the parking position the wiper blade 12 engages the park portion 7b of the visor 7. And in the operating position the wiper blade 12 engages the view portion 7a of the visor 7. In order to drain water from the roof module, for example water collected by the wiper assembly and/or accumulated in the guide, the guide may be connected to drain channels from the vehicle body, as for example by tubing or ducts.

Fig. 3 shows a cross-section of the roof module of Fig. 1 along line dotted line A-A'. The cross-section illustrates the wiper assembly 11, a sliding mechanism 17, the visor 7 and the guide 18. The wiper assembly 11 includes the wiper blade 12 that is mounted on the wiper arm 13. In this example, the wiper arm 13 is hingeably mounted on a base 16. The sliding mechanism 17 includes a driven slider 19 whereon a rod 15 is mounted. The rod 15 is configured to pivotally carry the base 16 of the wiper assembly 11. Thus, the rod 15 defines a pivot joint 15'. In some embodiments, the base may form an integral part of the wiper arm. In other embodiments, the base may form an integral part of the rod.

The guide 18 has a slider channel 25 for guiding the driven slider 19 parallel to the visor 7 of the sensor housing 6. The wiper assembly 11 may further include tensioning means for tensioning the wiper blade, or at least the lip of the wiper blade, against the visor 7 in the operating position. The tensioning means may be a torsion spring, coil spring, elastomeric material or other suitable means providing a bias force to return to a default position after being moved out thereof.

As can be seen in Fig. 3, the roof module further includes a seal 22 for sealing a gap between the visor 7 and the guide 18. In this example, the seal consists of two touching ribs 22a, 22b. Between these ribs 22a, 22b the driven slider 19 protrudes from one side through the seal 22 to another side. In other examples, it may be that only the rod protrudes from the driven slider on one, inner, side of the seal through the seal and such that the base may pivot at the other, outer side of the seal and carry the wiper assembly. The guide channel 18 is shaped such that when the roof module is mounted on a vehicle roof the bottom of the guide is inclined when viewed from the front. This results in that the mechanics and electronics of the module inside the housing are raised relative to the outer portion of the guide 18. Accordingly, the lower outer portion of the guide may function as water drainage, while ensuring that the upper portion remains clear from any fluid that might be passing through the seal.

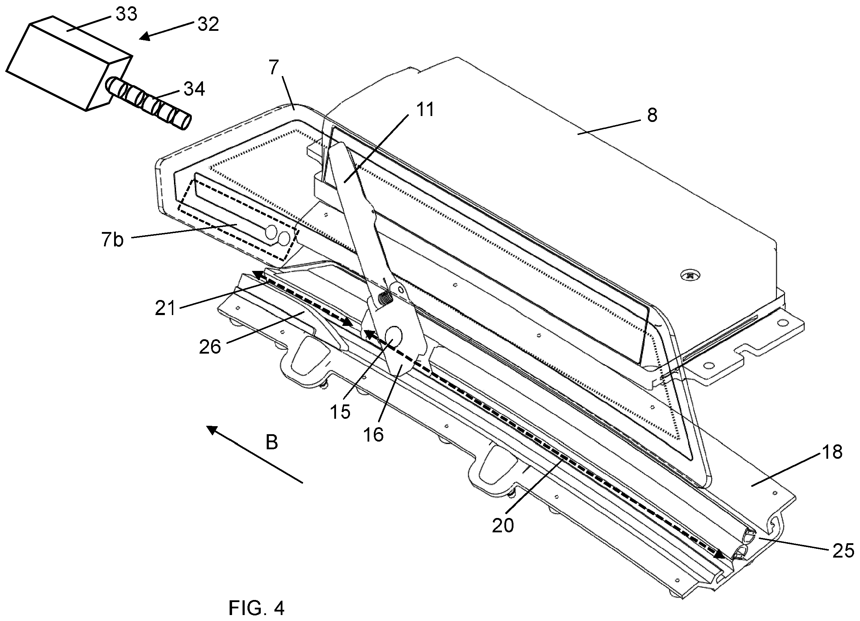

Referring to Fig. 4, an exploded view of the roof module of Fig. 1 illustrates the guide 18, the sensor 8, the visor 7, the wiper assembly 11 and the wiping path 20 and parking path 21. The sliding mechanism is configured for sliding the wiper assembly 11 over the wiping path 20, indicated by dotted line in Fig. 4. The guide 18 and the sliding mechanism are configured such that when sliding the wiper assembly11 over the wiping path 20 the wiper arm 13 slides along the sensor housing 6 such that the wiper blade 12 may wipe the visor 7. The guide 18 and the sliding mechanism 17 are further configured such that when sliding the wiper assembly 11 over the parking path 21 the wiper arm 13 slides along the sensor housing 6 such that the wiper blade 12 is moved over the park portion 7b of the visor 7.

The guide 18 further includes a locator mechanism, in the embodiment of Fig. 4 embodied as a locator cam 26 positioned in the parking path 21. The locator mechanism is configured to pivot the wiper assembly 11 into a parking position by acting on the base 16 when the driven slider 19 is moved in the slider channel 25 along the parking path 2. When moved in the direction of the park portion 7b of the visor 7, as indicated by arrow B, the wiper assembly 11 will pivot to a collapsed, here substantially horizontal, position. When one outer end of the base 16 hits the locator cam 26, the base 16 will pivot around pivot joint 15' when the driven slider 19 is moved further to the side. The shape of the locator cam 26 is chosen such that the base 16 and wiper assembly 11 mounted thereon will pivot until the wiper assembly 11 is in the, here horizontal, parking position.

Vice versa, when the driven slider 19 moves away from the park portion 7b, the shape of the locator cam 26 will ensure that the base and therewith wiper assembly is allowed to take a, here vertical, operation position again.

In the embodiment of Fig.4, the locator cam and base are aligned to move relative to each other within a same plane, meaning that movement of the wiper assembly towards the cam will result in direct contact. In some embodiments, the base may be provided with contact means as e.g. a pin or other protruding part. Furthermore, in Fig. 4, the locator cam is positioned at a height relatively below the pivot point and acts on a lower end of the base or part thereof. In other embodiments, the locator cam may be positioned at a height relatively above the pivot point and act upon a high end of the base or part thereof. Depending on where the locator cam acts upon, low end or high end, the wiper assembly will either pivot to one side or the other.

As will be understood, the pivoting of the wiper arm about the pivot point is controlled by the arrangement of the wiper assembly. The orientation of the wiper arm with regard to the visor may be arranged to take any desired angle, depending on the application and, for example, may be set to run parallel to a side end of the visor.

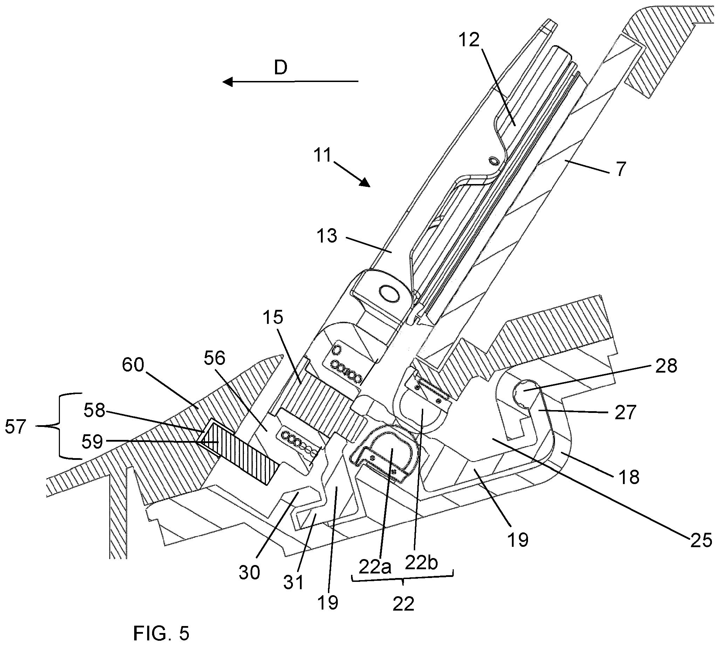

Referring to Fig. 5, a cross-section of another example of a roof module is shown. In this example, the roof module differs from the embodiment of Fig. 4 in that the locator mechanism 57 includes a locator curve 58 and corresponding locator pin 59. The locator curve 58 is embedded in a front side panel 60 of the guide 18. The front side panel may be a wind deflector or a part thereof. The locator pin 59 protrudes from the base 56 of the wiper assembly 11 towards an opposing side of the front side panel 60 and into the locator curve 58. The locator curve 58 may include a wiping portion 58a and a parking portion 58b.

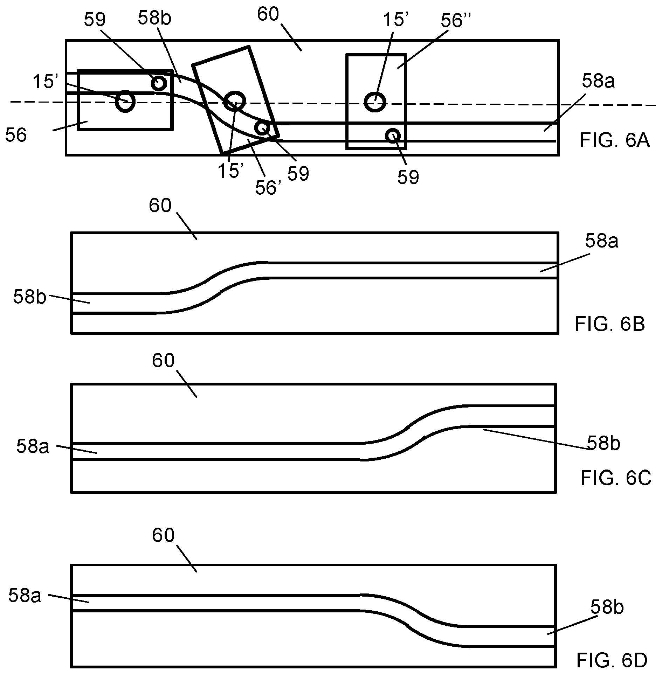

Referring to Fig. 6A, an example of the shape of the locator curve 58 is illustrated. The locator curve provides a kinematic movement for the wiper assembly that is similar to that of locator cam 26 of Fig. 4. When the driven slider 19 is moved through the channel 25 along the wiping path 20 and the parking path 21, the locator pin 59 will travel through the wiping portion 58a and the parking portion 58b of the locator curve 58. When the pin 59 travels through an S-portion of the curve 58, the wiper assembly is pivoted about the pivot joint 15' of the rod 15. The S-curve portion determines a transition between the wiping portion 58a and the parking portion 58b. The movement and rotation of the base 56 is illustrated in Fig. 6A by consecutive positions of the base 56, 56'and 56", moving from left to right.

As will be understood, the travelling of the locator pin 59 through the wiping portion 58a corresponds with the sliding of the wiper assembly 11 over the wiping path 20 and the travelling of the locator pin 59 through the parking portion 58b corresponds with the sliding of the wiper assembly 11 over the parking path 21. The location of the pin 59 is with an offset with regard to pivot point 15'. The offset will determine the manner of rotation and angle at which the base 56 will be.

Referring to Figs. 6B-D, various alternative examples of locator curves 58 are illustrated. Depending on the position of the locator pin on the base, relatively above or below the pivot joint, the wiper assembly will pivot in one direction or another. Further means for limiting the freedom of rotation of the wiper assembly in a desired direction may be arranged on the base to provide a locking or blocking stop.

Referring to Figs. 3 and 5, the slider channel 25 may have a profile, in cross-section, with a recessed slide portion 28 extending in a longitudinal direction of the channel. As can be seen in the cross-sections, the recessed slide portion 28 is also perpendicular to the longitudinal plane of the slider channel 25. The slider 19, in these embodiments, further includes a raised wall or flange 27 that is intended to cooperate with the recessed portion 28 and to slide therethrough when the driven slider is moved through the channel. The flange 27 protrudes perpendicular from a main body of the driven slider 19. The co-operative configuration of recessed portion 28 and flange 27 may prevent the driven slider 19 from skewing within the channel 25. In addition, the guide may be provided with a flange portion 30 configured protruding over a lip 31 of the driven slider 19, as is shown in Figs. 3 and 5.

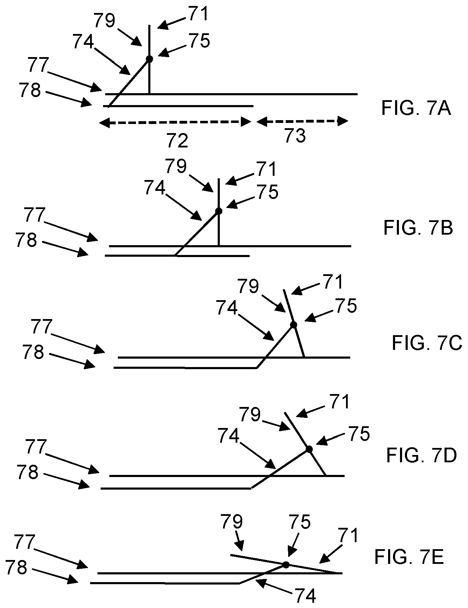

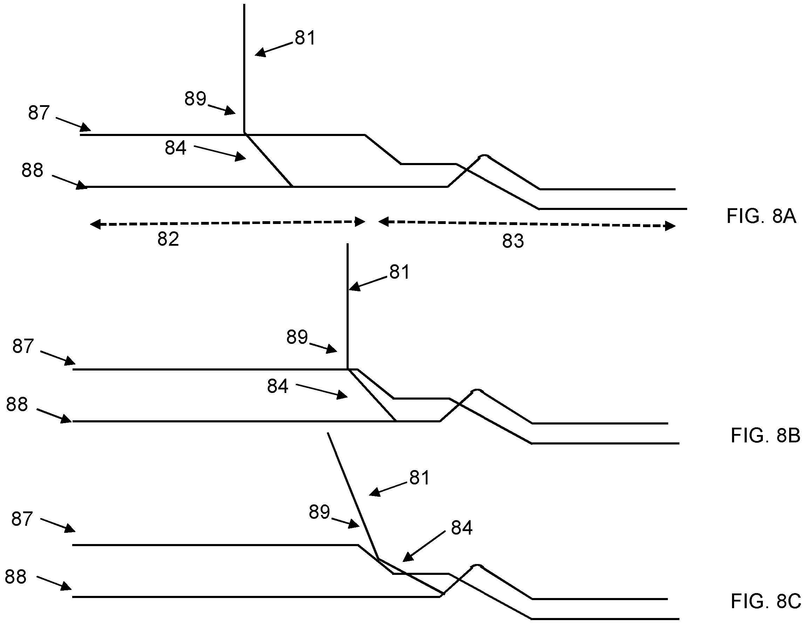

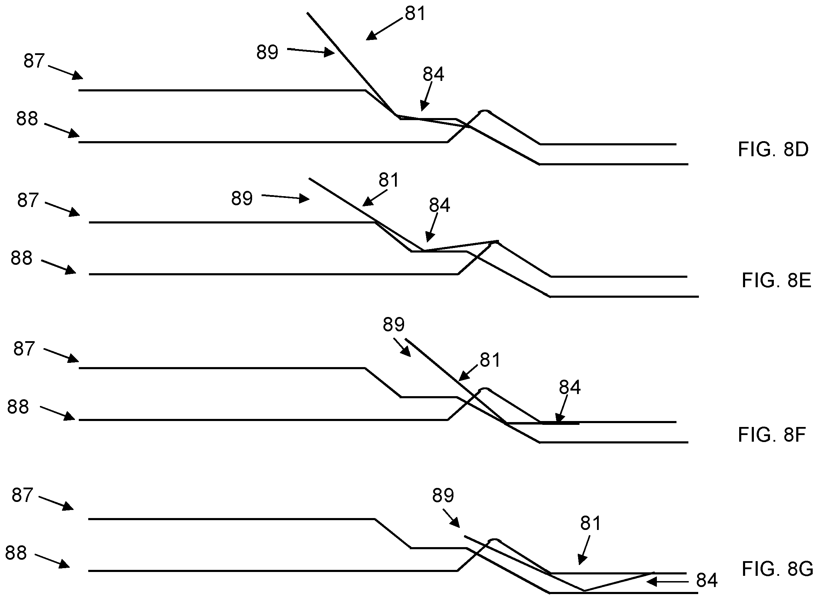

Referring to Figs. 7 and 8, further alternative examples of locator curves are schematically illustrated. Figs. 7A-E illustrate subsequent positions of the same wiper assembly 71 sliding from left to right along the wiping path 72 and the parking path 73. Hence, the parking position is on the right side. In this embodiment, the locator curve includes two locator tracks 77, 78. A first locator track 78 guides a locator pin of a wiper leg 74 and a second locator track guides a locator pin of a wiper arm 79. From an initial position in Fig. 7A, when sliding the wiper assembly 71 to the right, both the wiper leg 74 and wiper arm 79 will move accordingly. In Fig. 7C, the wiper leg 74 will be halted at a lower end, and cause the wiper arm 79 to pivot about pivot joint 75. When the wiper assembly 71 slides further, this will result in the wiper arm 79 collapsing further downwards, see Fig. 7D, until the wiper arm 79 reaches a final parking position at the park portion of the visor 7, see Fig. 7E. Again, the movement of the wiper assembly 71 may be arranged by a sliding mechanism that includes a driven slider that is moved along a guide.

Referring to Figs. 8A-G, the kinematic movement of another embodiment of a sliding mechanism with locator curve for a vehicle roof module are illustrated subsequently. The locator curve again includes two locator tracks 87, 88. The wiper assembly 81 slides, with subsequent position illustrated in Figs. 8A-8G, from left to right along the wiping path 82 and the parking path 83. Hence, the parking position is again on the right side. The wiper assembly 81 includes a wiper leg 84 and a wiper arm 89.

From an initial position in Fig. 8A, when sliding the wiper assembly 81 to the right, both the wiper leg 84 and wiper arm 89 will move accordingly, Fig. 8B. As seen in Fig. 8C, the wiper leg 84 will trail ahead of the wiper arm 89, which due to the elaborate S-curve will be lowered. When the wiper assembly 81 slides further, this will result in the wiper arm 89 collapsing further downwards, see Fig. 8D, while the wiper leg 84 will be lifted by the locator track 88. When the wiper arm 89 is in a desired position, sufficient to be parked as in Fig. 8E, the wiper arm 89 and wiper leg 84 move further downward together, Fig. 8F until the wiper assembly reaches the final parking position at the park portion of the visor 7, see Fig. 8G. Again, the movement of the wiper assembly 81 may be arranged by a sliding mechanism that includes a driven slider that is moved along a guide.

In each of the embodiments described, the roof module may further include a drive assembly 32, as e.g. shown in Fig. 4, configured for driving the driven slider 19 back and forth through the slider channel 25 of the guide 18. Thereto, the drive assembly 32 may include a motor 33 and a drive cable 34, the motor being arranged for operating the driven slider 19 by means of the drive cable 34. The motor may be any kind of electric motor capable of pulling and pushing the drive cable 34 in either direction. To further control movement of the drive cable, for example to prevent coiling or convolving thereof, the drive cable may be fed through a rigid sleeve or gutter. Accordingly, the slider channel 25 may be provided with such a gutter. In the embodiment of Figs. 3 and 5, the recessed slide portion 28 extending longitudinally within the slider channel 25 may function as drive cable gutter.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. Vehicle roof module (1) for a sensor, comprising:
a wiper assembly (11) comprising a wiper blade (12) carried on a wiper arm (13);
a sensor housing (6) comprising a visor (7), the visor comprising a view portion (11) and park portion (14);
a guide (18) defining a wiping path (20) and a parking path (21);
a sliding mechanism (17) configured for sliding the wiper assembly (11) over the guide (18) along the wiping path (20) and the parking path (21) and comprising a driven slider (19) that comprises a rod (15) configured for pivotally carrying a base (16), wherein the base (16) is configured for carrying the wiper assembly (11);
wherein the guide (18) comprises a slider channel (25) for guiding the driven slider (19) parallel to the visor (7) of the sensor housing (6);
wherein sliding the wiper assembly (11) over the wiping path (20) slides the wiper arm (13) along the sensor housing (6) such that the wiper blade (12) wipes the view portion of the visor (7);
wherein sliding the wiper assembly (11) over the parking path (21) slides the wiper arm (13) along the sensor housing (6) such that the wiper blade (12) is moved over the park portion of the visor (7), **characterized in that** the guide further comprises:
a locator mechanism (26, 57) configured to pivot the wiper assembly (11) in the parking position by acting on the base (16) when the driven slider (19) is moved in the slider channel (25) along the parking path (21) towards the park portion (7b).

2. Vehicle roof module according claim 1,
wherein sliding along the parking path (21) slides the wiper assembly (11) between a parking position in the parking path (21) and an operational position in the wiping path (20);
wherein in the parking position the wiper blade (12) engages the park portion of the visor (7); and
in the operating position the wiper blade (12) engages the view portion of the visor (7).

3. Vehicle roof module according to claim 1 or 2,
the locator mechanism comprising at least one locator cam (26).

4. Vehicle roof module according to claim 1, 2 or 3,
the locator mechanism comprising:
at least one locator pin (59) arranged on the base (16); and
at least one locator curve (58) comprising a wiping portion (58a) and a parking portion (58b).

5. Vehicle roof module according to claim 4,
wherein, when moving the driven slider (19) in the slider channel (25) along the wiping path (20), the at least one locator pin (59) slides in the locator curve wiping portion (58a); and
wherein, when moving the driven slider (19) in the slider channel (25) along the parking path (21), the at least one locator pin (59) slides in the locator curve parking portion (58b).

6. Vehicle roof module according to claim 4, the guide (18) further comprising a front side panel (60), such as a wind deflector, running parallel to the visor (7), wherein the front side panel (60) comprises the locator curve (58).

7. Vehicle roof module according to any of the preceding claims, further comprising a seal (22) for sealing a gap between the sensor housing (6) and the guide (18); and
wherein the driven slider (19) and/or the rod (15) of the driven slider (19) protrudes through the seal (22).

8. Vehicle roof module according to any of the preceding claims, wherein the slider channel (25) comprises a recessed slide portion (28); and
the driven slider (19) comprises a flange (27) corresponding to the recessed slide portion (28).

9. Vehicle roof module according to any of the preceding claims, further comprising a sensor (8).

10. Vehicle roof module according to any of the preceding claims, further comprising a drive assembly (32) configured for driving the driven slider (19) through the guide (18).

11. Vehicle roof module according to claim 10, wherein the drive assembly (32) comprises a motor (33) and a drive cable (34), the motor (33) being arranged for operating the driven slider (19) by means of the drive cable (34).

12. Vehicle roof module according to claim 11, wherein the slider channel (25) comprises a drive cable gutter for the drive cable (34).

13. Vehicle roof module according to claim 12, wherein the recessed slide portion (28) of the slider channel (25) comprises the drive cable gutter for the drive cable (34).

## Patentansprüche

1. Fahrzeugdachmodul (1) für einen Sensor, aufweisend:
eine Wischerbaugruppe (11), die ein Wischerblatt (12) aufweist, das an einem Wischerarm (13) getragen wird,
ein Sensorgehäuse (6), das ein Visier (7) aufweist, wobei das Visier einen Sichtabschnitt (11) und einen Parkabschnitt (14) aufweist,
eine Führung (18), die einen Wischpfad (20) und einen Parkpfad (21) definiert,
einen Verschiebemechanismus (17), der konfiguriert ist zum Verschieben der Wischerbaugruppe (11) über die Führung (18) entlang des Wischpfads (20) und des Parkpfads (21) und der einen angetriebenen Schieber (19) aufweist, der eine Stange (15) aufweist, die konfiguriert ist zum schwenkbaren Tragen einer Basis (16), wobei die Basis (16) konfiguriert ist zum Tragen der Wischerbaugruppe (11),
wobei die Führung (18) aufweist einen Schieberkanal (25) zum Führen des angetriebenen Schiebers (19) parallel zu dem Visier (7) des Sensorgehäuses (6),
wobei das Verschieben der Wischerbaugruppe (11) über den Wischpfad (20) den Wischerarm (13) entlang des Sensorgehäuses (6) derart verschiebt, dass das Wischerblatt (12) den Sichtabschnitt des Visiers (7) wischt,
wobei das Verschieben der Wischerbaugruppe (11) über den Parkpfad (21) den Wischerarm (13) entlang des Sensorgehäuses (6) derart verschiebt, dass das Wischerblatt (12) über den Parkabschnitt des Visiers (7) bewegt wird, **dadurch gekennzeichnet, dass** die Führung ferner aufweist:
einen Positioniermechanismus (26, 57), der konfiguriert ist, um die Wischerbaugruppe (11) in die Parkposition zu schwenken durch Einwirken auf die Basis (16), wenn der angetriebene Schieber (19) in dem Schieberkanal (25) entlang des Parkpfads (21) in Richtung zu dem Parkabschnitt (7b) bewegt wird.

2. Fahrzeugdachmodul gemäß Anspruch 1,
wobei das Verschieben entlang des Parkpfads (21) die Wischerbaugruppe (11) zwischen einer Parkposition in dem Parkpfad (21) und einer Betriebsposition in dem Wischpfad (20) verschiebt,
wobei in der Parkposition das Wischerblatt (12) mit dem Parkabschnitt des Visiers (7) in Eingriff steht, und wobei
in der Betriebsposition das Wischerblatt (12) mit dem Sichtabschnitt des Visiers in Eingriff steht (7).

3. Fahrzeugdachmodul gemäß Anspruch 1 oder 2,
wobei der Positioniermechanismus zumindest einen Positioniernocken (26) aufweist.

4. Fahrzeugdachmodul gemäß Anspruch 1, 2 oder 3,
wobei der Positioniermechanismus aufweist:
zumindest einen Positionierstift (59), der an der Basis (16) angeordnet ist, und
zumindest eine Positionierkurve (58), die einen Wischabschnitt (58a) und einen Parkabschnitt (58b) aufweist.

5. Fahrzeugdachmodul gemäß Anspruch 4,
wobei, wenn der angetriebene Schieber (19) in dem Schieberkanal (25) entlang des Wischpfads (20) bewegt wird, der zumindest eine Positionierstift (59) sich in dem Positionierkurven-Wischabschnitt (58a) verschiebt, und
wobei, wenn der angetriebene Schieber (19) in dem Schieberkanal (25) entlang des Parkpfads (21) bewegt wird, der zumindest eine Positionierstift (59) sich in dem Positionierkurven-Parkabschnitt (58b) verschiebt.

6. Fahrzeugdachmodul gemäß Anspruch 4, wobei die Führung (18) ferner eine Frontseitenplatte (60), wie etwa einen Windabweiser, aufweist, die parallel zu dem Visier (7) verläuft, wobei die Frontseitenplatte (60) die Positionierkurve (58) aufweist.

7. Fahrzeugdachmodul gemäß irgendeinem der vorhergehenden Ansprüche, ferner aufweisend eine Dichtung (22) zum Abdichten eines Spalts zwischen dem Sensorgehäuse (6) und der Führung (18), und
wobei der angetriebene Schieber (19) und/oder die Stange (15) des angetriebenen Schiebers (19) durch die Dichtung (22) hindruch vorsteht.

8. Fahrzeugdachmodul gemäß irgendeinem der vorhergehenden Ansprüche, wobei der Schieberkanal (25) einen ausgesparten Schieberabschnitt (28) aufweist, und wobei
der angetriebene Schieber (19) einen Flansch (27) aufweist, der zu dem ausgesparten Schieberabschnitt (28) korrespondiert.

9. Fahrzeugdachmodul gemäß irgendeinem der vorhergehenden Ansprüche, ferner aufweisend einen Sensor (8),

10. Fahrzeugdachmodul gemäß irgendeinem der vorhergehenden Ansprüche, ferner aufweisend eine Antriebsbaugruppe (32), die konfiguriert ist zum Antreiben des angetriebenen Schiebers (19) durch die Führung (18).

11. Fahrzeugdachmodul gemäß Anspruch 10, wobei die Antriebsbaugruppe (32) einen Motor (33) und ein Antriebsseil (34) aufweist, wobei der Motor (33) angeordnet ist zum Betreiben des angetriebenen Schiebers (19) mittels des Antriebsseils (34).

12. Fahrzeugdachmodul gemäß Anspruch 11, wobei der Schieberkanal (25) eine Antriebsseilrinne für das Antriebsseil (34) bildet.

13. Fahrzeugdachmodul gemäß Anspruch 12, wobei der ausgesparte Schieberabschnitt (28) des Schieberkanals (25) die Antriebsseilrinne für das Antriebsseil (34) aufweist.

## Revendications

1. Module de toit de véhicule (1) pour un capteur, comprenant :
un ensemble d'essuie-glace (11) comprenant une lame d'essuie-glace (12) portée sur un bras d'essuie-glace (13) ;
un boîtier de capteur (6) comprenant une visière (7), la visière comprenant une partie de visibilité (11) et une partie de stationnement (14) ;
un guide (18) définissant un trajet d'essuyage (20) et un trajet de stationnement (21) ;
un mécanisme coulissant (17) configuré pour faire glisser l'ensemble d'essuie-glace (11) sur le guide (18) le long du trajet d'essuyage (20) et du trajet de stationnement (21) et comprenant un coulisseau entraîné (19) qui comprend une tige (15) configurée pour porter de manière pivotante une base (16), dans lequel la base (16) est configurée pour porter l'ensemble d'essuie-glace (11) ;
dans lequel le guide (18) comprend un canal de coulisseau (25) pour guider le coulisseau entraîné (19) parallèlement à la visière (7) du boîtier de capteur (6) ;
dans lequel le coulissement de l'ensemble d'essuie-glace (11) sur le trajet d'essuyage (20) fait glisser le bras d'essuie-glace (13) le long du boîtier de capteur (6) de sorte que la lame d'essuie-glace (12) essuie la partie de visibilité de la visière (7) ;
dans lequel le coulissement de l'ensemble d'essuie-glace (11) sur le trajet de stationnement (21) fait glisser le bras d'essuie-glace (13) le long du boîtier de capteur (6) de sorte que la lame d'essuie-glace (12) est déplacée sur la partie de stationnement de la visière (7), **caractérisé en ce que** le guide comprend en outre :
un mécanisme de localisation (26, 57) configuré pour faire pivoter l'ensemble d'essuie-glace (11) dans la position de stationnement en agissant sur la base (16) lorsque le coulisseau entraîné (19) est déplacé dans le canal de coulisseau (25) le long du trajet de stationnement (21) vers la partie de stationnement (7b).

2. Module de toit de véhicule selon la revendication 1, dans lequel le coulissement le long du trajet de stationnement (21) fait glisser l'ensemble d'essuie-glace (11) entre une position de stationnement dans le trajet de stationnement (21) et une position opérationnelle dans le trajet d'essuyage (20) ;
dans lequel dans la position de stationnement la lame d'essuie-glace (12) est en prise avec la partie de stationnement de la visière (7) ; et
dans la position de fonctionnement, la lame d'essuie-glace (12) est en prise avec la partie de visibilité de la visière (7).

3. Module de toit de véhicule selon la revendication 1 ou 2,
le mécanisme de localisation comprenant au moins une came de localisation (26).

4. Module de toit de véhicule selon la revendication 1, 2 ou 3,
le mécanisme de localisation comprenant :
au moins une goupille de localisation (59) disposée sur la base (16) ; et
au moins une courbe de localisation (58) comprenant une partie d'essuyage (58a) et une partie de stationnement (58b).

5. Module de toit de véhicule selon la revendication 4, dans lequel, lors du déplacement du coulisseau entraîné (19) dans le canal de coulisseau (25) le long du trajet d'essuyage (20), l'au moins une goupille de localisation (59) glisse dans la partie d'essuyage de courbe de localisation (58a) ; et
dans lequel, lors du déplacement du coulisseau entraîné (19) dans le canal de coulisseau (25) le long du trajet de stationnement (21), l'au moins une goupille de localisation (59) glisse dans la partie de stationnement de courbe de localisation (58b).

6. Module de toit de véhicule selon la revendication 4, le guide (18) comprenant en outre un panneau latéral avant (60), tel un déflecteur d'air, s'étendant parallèlement à la visière (7), dans lequel le panneau latéral avant (60) comprend la courbe de localisation (58).

7. Module de toit de véhicule selon l'une quelconque des revendications précédentes, comprenant en outre un joint (22) pour l'étanchéité d'un espace entre le boîtier de capteur (6) et le guide (18) ; et
dans lequel le coulisseau entraîné (19) et/ou la tige (15) du coulisseau entraîné (19) dépasse à travers le joint (22).

8. Module de toit de véhicule selon l'une quelconque des revendications précédentes, dans lequel le canal de coulisseau (25) comprend une partie de glissière encastrée (28) ; et
le coulisseau entraîné (19) comprend une bride (27) correspondant à la partie de glissière encastrée (28).

9. Module de toit de véhicule selon l'une quelconque des revendications précédentes, comprenant en outre un capteur (8).

10. Module de toit de véhicule selon l'une quelconque des revendications précédentes, comprenant en outre un ensemble d'entraînement (32) configuré pour entraîner le coulisseau entraîné (19) à travers le guide (18).

11. Module de toit de véhicule selon la revendication 10, dans lequel l'ensemble d'entraînement (32) comprend un moteur (33) et un câble d'entraînement (34), le moteur (33) étant disposé pour actionner le coulisseau entraîné (19) au moyen du câble d'entraînement (34).

12. Module de toit de véhicule selon la revendication 11, dans lequel le canal de coulisseau (25) comprend une gouttière de câble d'entraînement pour le câble d'entraînement (34).

13. Module de toit de véhicule selon la revendication 12, dans lequel la partie de glissière encastrée (28) du canal de coulisseau (25) comprend la gouttière de câble d'entraînement pour le câble d'entraînement (34).
